# EUROPÄISCHE PATENTSCHRIFT

(11) **EP 3 232 103 B1**
(45) Veröffentlichungstag und Bekanntmachung des Hinweises auf die Patenterteilung: **19.02.2020**
(21) Anmeldenummer: 17163232.6
(22) Anmeldetag: 28.03.2017
(51) Int. Cl.: F16K 31/56, F16K 1/22, B60P 3/22, F16K 31/52, F16K 1/24

(54) **ANSCHLUSSARMATUR FÜR EIN MINERALÖLFAHRZEUG**
CONNECTION FITTING FOR A PETROLEUM VEHICLE
ROBINETTERIE DE RACCORDEMENT POUR UN VÉHICULE DE TRANSPORTS DE PRODUITS PÉTROLIERS

(30) Priorität: 08.04.2016 DE 202016101873 U
(43) Veröffentlichungstag der Anmeldung: 18.10.2017
(73) Patentinhaber: Niehüser, Hermann, 33449 Langenberg (DE)
(72) Erfinder: Niehüser, Hermann, 33449 Langenberg (DE)
(74) Vertreter: Wickord, Wiro

(56) Entgegenhaltungen:
- EP-A1- 2 058 566
- EP-A2- 2 264 342
- WO-A1-2012/111910
- FR-A- 1 199 122
- JP-U- 3 201 573

## Beschreibung

Die Erfindung betrifft eine Anschlussarmatur für ein Mineralölfahrzeug nach dem Oberbegriff des Patentanspruchs 1. Eine solche Anschlussarmatur ist aus der JP 3 201573 U bekannt.

Aus der EP 2 264 342 A2 ist ein Plattenventil mit einer um 90° schwenkbaren Ventilplatte bekannt. Die Ventilplatte wird hierbei mittels einer Verstellmechanik aus einer Schließstellung in eine Öffnungsstellung verbracht.

Aus der FR 1 199 122 A ist ebenfalls ein Ventil mit einer schwenkbar gehaltenen Ventilplatte bekannt. Die Ventilplatte wird entlang einer Steuerkulisse geführt und unmittelbar aus einer Schließstellung um 90° in eine Öffnungsstellung verschwenkt.

Aus der EP 2 058 566 A1 ist ein Antrieb zum Verschwenken einer Ventilplatte bekannt.

Eine gattungsgemäße Anschlussarmatur wird heute üblicherweise an Mineralöltankfahrzeugen vorgesehen. In der Schließstellung des Ventilmoduls liegt der Ventilteller an einem Ventilsitz des Gehäuses an und verschließt die erste Durchflussöffnung der Anschlussarmatur in der Weise, dass in einem Tank des Mineralöltankfahrzeugs bevorratete Flüssigkeit nicht austreten kann. Zum Befüllen des Tanks wird die Anschlussarmatur extern kontaktiert und über ein externes Betätigungselement der Ventilteller der Anschlussarmatur mit der daran gehaltenen Ventilstange axial so verschoben, dass sich im Bereich der ersten Durchflussöffnung zwischen dem Ventilsitz und dem Ventilteller ein axialer Ringspalt für die Flüssigkeit bildet und über den axialen Ringspalt der Tank des Mineralöltankfahrzeugs befüllt werden kann. Die Anschlussarmatur befindet sich zum Entnehmen der Flüssigkeit aus dem Tank ebenfalls in der Befüllstellung. Die Befüllstellung wird hierbei jedoch nicht durch eine externe Druckbeaufschlagung des Ventiltellers, sondern durch eine Betätigung des Betätigungsmoduls eingestellt. Es wird hierbei zunächst ein Mineralölschlauch an die Anschlussarmatur angesetzt worden, sodass nach dem Freigeben der ersten Durchflussöffnung die im Mineralöltankfahrzeug bevorratet Flüssigkeit austreten kann.

Obwohl sich die gattungsgemäße Anschlussarmatur in der Praxis grundsätzlich bewährt hat und weite Verbreitung findet, steht das Bestreben, den Strömungswiderstand insbesondere beim Entnehmen der Flüssigkeit aus dem Tank des Mineralöltankfahrzeugs zu reduzieren und so den Entnahmevorgang zu beschleunigen. Hierdurch kann es gelingen, die Standzeiten des Mineralöltankfahrzeugs bei der Entnahme der Flüssigkeit zu verkürzen und letztlich mehr Entnahmevorgänge in gleicher Zeit durchzuführen.

Zur Lösung der Aufgabe weist die Erfindung die Merkmale des Patentanspruchs 1 auf.

Der besondere Vorteil der Erfindung besteht darin, dass durch die schwenkbare beziehungsweise klappbare Anordnung des Ventiltellers ein Strömungsquerschnitt für die Flüssigkeit vergrößert werden kann. Es ist insbesondere so, dass die Flüssigkeit nicht wie heute üblich durch den zwischen dem Ventilteller und dem Ventilsitz gebildeten Ringspalt fließt. Vielmehr kann der Ventilteller in Richtung der Strömung gekippt und hierdurch der Strömungsquerschnitt vergrößert werden. Durch den größeren Strömungsquerschnitt reduziert sich der Strömungswiderstand und es kann mehr Flüssigkeit pro Zeiteinheit durch die Anschlussarmatur durchströmen. Besonders relevant ist dies bei der Entnahme der Flüssigkeit an einer Tankstelle, da dieser Entnahmevorgang regelmäßig ohne Pumpenunterstützung erfolgt und insofern der Fließ- beziehungsweise Strömungswiderstand unmittelbar die Standzeit des Mineralöltankfahrzeugs beeinflusst.

Kernidee der Erfindung ist es insofern, zusätzlich zu der Schließstellung und der Befüllstellung eine Entnahmestellung zu definieren, in der der Ventilteller strömungsgünstig angeordnet ist und ein Strömungswiderstand für die Flüssigkeit sich reduziert. In der durch die erfindungsgemäße Anschlussarmatur neu geschaffene Entnahmestellung ist der Ventilteller in Strömungsrichtung geschwenkt angeordnet mit der Folge, dass zwischen dem Ventilsitz und dem Ventilteller nicht wie heute üblich ein Ringspalt gebildet ist und die Flüssigkeit zum Durchströmen des Ringspalts umgelenkt werden muss. Vielmehr vergrößert sich der Durchflussquerschnitt durch die geschwenkte Anordnung des Ventiltellers. Zudem kann die erste Durchflussöffnung im Wesentlichen gerade angeströmt werden.

Erhalten bleibt hierbei die gewohnte Funktion der Anschlussarmatur zum Schließen des Tanks und beim Befüllen des Tanks. In der Schließstellung ist der Ventilteller wie gewohnt dichtend an dem Ventilsitz des Gehäuses der Anschlussarmatur angelehnt. In der Befüllstellung, in der wie gehabt die axiale Betätigungsrichtung (Axialrichtung) des Ventilmoduls senkrecht zu der Erstreckungsebene des Ventiltellers orientiert ist, tritt die Flüssigkeit über die erste Durchflussöffnung in die Anschlussarmatur und strömt über den zwischen dem Ventilteller und dem Ventilsitz gebildeten Ringspalt in Richtung der zweiten Durchflussöffnung. Die Betätigung des Ventilmoduls erfolgt hierbei in gewohnter Weise von extern so, dass auf dem Ventilteller eine Kraft aufgeprägt wird und die Ventilstange mit dem daran gehaltenen Ventilteller aus dem Ventilsitz gedrückt und axial verschoben wird. Eine Modifikation externer Anschlusskomponenten für das Mineralöltankfahrzeug ist insofern nicht erforderlich. Die Weiterverwendung dieser externen Anschlusskomponenten ist gewährleistet.

Nach einer bevorzugten Ausführungsform der Erfindung ist der Ventilteller exzentrisch an der Ventilstange derart gehalten, dass die Drehachse beabstandet zu einer in die Axialrichtung orientierten Mittelachse der Ventilstange vorgesehen ist. Durch die exzentrische Halterung des Ventiltellers in Bezug zu der Ventilstange kann die Verschwenkbewegung des Ventiltellers um die Drehachse beim Entnehmen bei Flüssigkeit in vorteilhafterweise passiv realisiert werden. Die gegen den Ventilteller strömende Flüssigkeit schwenkt den Ventilteller selbstständig um die Drehachse, da in Folge der exzentrischen Orientierung der Drehachse an dem Ventilteller die von der Flüssigkeit beaufschlagten Teilflächen beidseits der Drehachse unterschiedlich groß sind und folglich eine Schwenkbewegung selbstständig eingeleitet wird. Aktorische Komponenten beziehungsweise mechanische Betätigungsmittel zum Verschwenken des Ventiltellers sind nicht erforderlich. Die erfinderische Anschlussarmatur kann insofern kostengünstig hergestellt werden und ist aufgrund der rein mechanischen Ausbildung des Schwenkmechanismus robust.

Nach der Erfindung ist der Ventilteller in der Entnahmestellung bezogen auf die Orientierung desselben in der Schließstellung beziehungsweise in der Befüllstellung um 90° +/- 10° geschwenkt angeordnet. Dabei ist bei einer Verschwenkung des Ventiltellers um 90° die Axialrichtung in der Erstreckungsebene des Ventiltellers orientiert. Vorteilhaft erlaubt diese Orientierung des Ventiltellers in der Entnahmestellung einen besonders geringen Strömungswiderstand und infolgedessen eine geringe Standzeit für das Mineralöltankfahrzeug bei der Abgabe der Flüssigkeit.

Nach einer Weiterbildung der Erfindung sind zur Realisierung der Schwenkbewegung des Ventiltellers in die Entnahmestellung ein Führungselement und ein mit dem Führungselement jedenfalls in der Schließstellung beziehungsweise in der Befüllstellung beziehungsweise in der Entnahmestellung in Wirkverbindung stehendes Stützelement vorgesehen. Hierbei ist entweder das Stützelement oder das Führungselement ortsfest bezogen auf das Gehäuse angeordnet. Das jeweils andere Element ist relativbeweglich zu dem ortsfesten Element vorgesehen. Sofern also das Stützelement ortsfest bezogen auf das Gehäuse vorgesehen ist, ist das Führungselement relativbeweglich zu dem Stützelement gehalten. Bevorzugt ist das Führungselement gemeinsam mit dem Ventilteller und/oder der Ventilstange verschiebbar in die Axialrichtung vorgesehen beziehungsweise um die Drehachse des Ventiltellers verschwenkbar. Sofern das Führungselement ortsfest bezogen auf das Gehäuse vorgesehen ist, ist das Stützelement relativbeweglich zu dem ortsfesten Führungselement gehalten. Beispielsweise kann als Führungselement eine an dem Gehäuse beziehungsweise der Gehäusewandung vorgesehen sein, in die das Stützelement eingreift. Vorteilhaft ergibt sich durch das Vorsehen des Führungselements und des Stützelements eine formschlüssige Führung beziehungsweise Arretierung des Ventiltellers jedenfalls in einer und bevorzugt einer Mehrzahl von Stellungen (Schließstellung, Befüllstellung, Entnahmestellung). Es ergibt sich hierdurch eine hohe Betriebssicherung und einer Fehlbedienung beziehungsweise -positionierung des Ventiltellers wird zuverlässig vorgebeugt.

Nach einer Weiterbildung der Erfindung ist das Stützelement nach Art eines Stifts ausgebildet, welcher in dem Gehäuse beziehungsweise bezogen auf ebendieses ortsfest gehalten ist. Der Stift ist beispielsweise unmittelbar an der Gehäusewandung festgelegt oder mittelbar über einen Stiftträger an dem Gehäuse gehalten. Beispielsweise ist das Führungselement nach Art einer Steuerkulisse ausgebildet und bezogen auf das ortsfeste Stützelement verschiebbar gehalten. Das Führungselement ist beispielsweise drehfest an dem Ventilteller des Ventilmoduls festgelegt. Es ergibt sich durch die Gestaltung des Stützelements als Stift und das Vorsehen der Steuerkulisse eine konstruktiv einfache und im Betrieb äußerst robuste Ausführung der erfindungsgemäßen Anschlussarmatur, welche überdies kostengünstig herzustellen ist und eine lange Lebensdauer aufweist.

Nach einer Weiterbildung der Erfindung sieht das Ventilmodul einen Exzenterhebel vor. Der Exzenterhebel ist zum einen in einem Gelenkpunkt drehbar und zugleich längsverschiebbar an dem Träger des Gehäuses beziehungsweise einem an dem Träger des Gehäuses angelegten Lagerelement gehalten. Zum anderen ist der Exzenterhebel bevorzugt endseitig um eine Schwenkachse drehbar und beabstandet zu der Drehachse des Ventiltellers an ebendiesem gehalten. Insbesondere kann dem Exzenterhebel eine Betätigungsfeder zugeordnet sein, welche in einer Wirkverbindung mit dem Exzenterhebel selbst und dem Träger des Gehäuses beziehungsweise dem Lagerelement steht derart, dass beim Verbringen des Ventilmoduls aus der Entnahmestellung in die Schließstellung der Ventilteller selbsttätig verschwenkt, bis die Erstreckungsebene des Ventiltellers senkrecht orientiert angeordnet ist zu der Axialrichtung. Es ergibt sich insofern durch das Vorsehen des Exzenterhebels eine kinematische Zwangsführung für den Ventilteller beim Schließen des Ventilmoduls. Die Zwangsführung stellt sicher, dass der Ventilteller beim Schließen nicht in der geschwenkten Orientierung an dem Ventilsitz angelehnt wird und eine Dichtung beschädigt oder zerstört wird.

Das Vorsehen der Betätigungsfeder als elastisches Element bewirkt zugleich eine Freilauffunktion, welche es erlaubt, den Ventilteller in der zweiten Axialposition der Ventilstange bezogen auf die Erstreckungsebene des Ventiltellers in der Befüllstellung senkrecht zu der Axialrichtung vorzusehen und in der Entnahmestellung verschwenkt anzuordnen. In der Entnahmestellung ist die Betätigungsfeder insofern auf Druck vorgespannt, während sie in der Schließstellung und in der Befüllstellung unbelastet beziehungsweise spielbehaftet zwischen dem Exzenterhebel und dem Träger beziehungsweise dem Lagerelement vorgesehen ist.

Zur Realisierung einer kinematisch vorteilhaften Gestaltung der erfindungsgemäßen Anschlussarmatur können die Schwenkachse des Exzenterhebels und die Drehachse des Ventiltellers zueinander parallel orientiert angeordnet sein. Insbesondere kann vorgesehen sein, dass die Schwenkachse und die Drehachse auf gegenüberliegenden Seiten der Mittelachse der Ventilstange vorzusehen. Jeweils können die Schwenkachse und die Drehachse in einer beliebigen Stellung des Ventilmoduls senkrecht orientiert zu der Mittelachse der Ventilstange vorgesehen sein.

Nach einer Weiterbildung der Erfindung ist das Betätigungsmodul nach Art einer Handhabe ausgebildet. Die Handhabe umfasst ein schwenkbaren, handbetätigten Bedienhebel, eine mit dem Bedienhebel drehfest verbundene Welle, welche durch die Gehäusewandung geführt und gegen das Gehäuse gedichtet ist, sowie einen mit der Welle in Wirkverbindung stehenden Gelenkhebelmechanismus. Der Gelenkhebelmechanismus umfasst beispielsweise zwei gelenkig miteinander verbundene Hebel, welche an der Welle einerseits sowie der Ventilstange oder einem mit der Ventilstange verschiebbaren Element des Ventilmoduls andererseits festgelegt sind. Alternativ kann das Betätigungsmodul ein pneumatisches Betätigungsmittel, insbesondere eine Pneumatikzylinder vorsehen zum Betätigen des Ventilmoduls.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter. Es zeigen:
- Fig. 1: eine perspektivische Vorderseitenansicht einer ersten Ausführungsform der erfindungsgemäßen Anschlussarmatur in einer Entnahmestellung,
- Fig. 2: einen Teilschnitt durch die Anschlussarmatur nach Fig. 1,
- Fig. 3: die Anschlussarmatur nach Fig. 2 in einer Schließstellung,
- Fig. 4: eine perspektivische Rückseitenansicht der Anschlussarmatur in der Schließstellung nach Fig. 3,
- Fig. 5: einen Längsschnitt durch die Anschlussarmatur nach Fig. 1 in der Schließstellung,
- Fig. 6: den Längsschnitt nach Fig. 5 mit der Anschlussarmatur in der Entnahmestellung,
- Fig. 7: den Längsschnitt nach den Fig. 5 und 6 mit der Anschlussarmatur in einer Befüllstellung,
- Fig. 8: eine perspektivische Rückseitenansicht der erfindungsgemäßen Anschlussarmatur nach einer zweiten Ausführungsform in einem Teilschnitt,
- Fig. 9: einen Längsschnitt durch die Anschlussarmatur nach Fig. 8 in der Schließstellung,
- Fig. 10: den Längsschnitt nach Fig. 9 mit der Anschlussarmatur in der Befüllstellung,
- Fig. 11: eine perspektivische Vorderseitenansicht der Anschlussarmatur nach den Fig. 8 bis 10, wobei die Anschlussarmatur in der Entnahmestellung vorgesehen ist,
- Fig. 12: eine perspektivische Rückseitenansicht der erfindungsgemäßen Anschlussarmatur in einer dritten Ausführungsform,
- Fig. 13: einen Längsschnitt durch die Anschlussarmatur nach Fig. 12 in der Schließstellung,
- Fig. 14: den Längsschnitt nach Fig. 13 mit der Anschlussarmatur in der Befüllstellung und
- Fig. 15: den Längsschnitt nach den Fig. 13 und 14 mit der Anschlussarmatur in der Entnahmestellung.

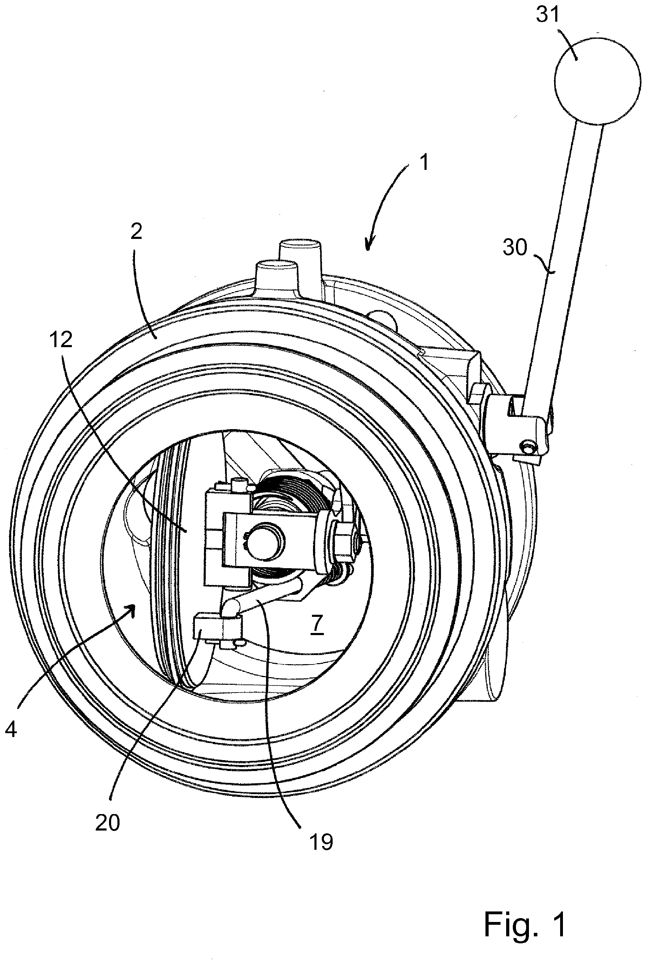

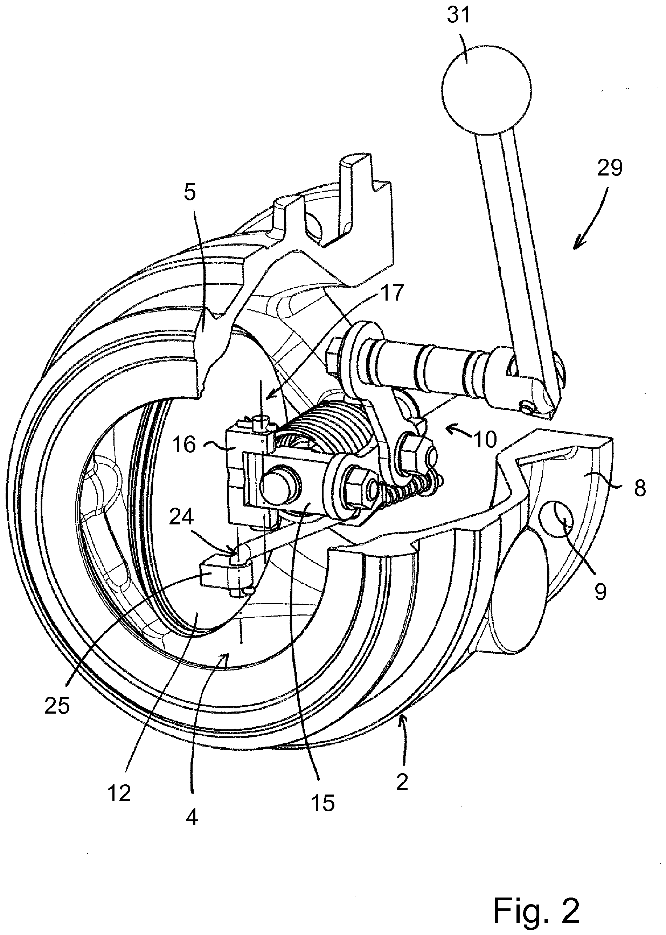

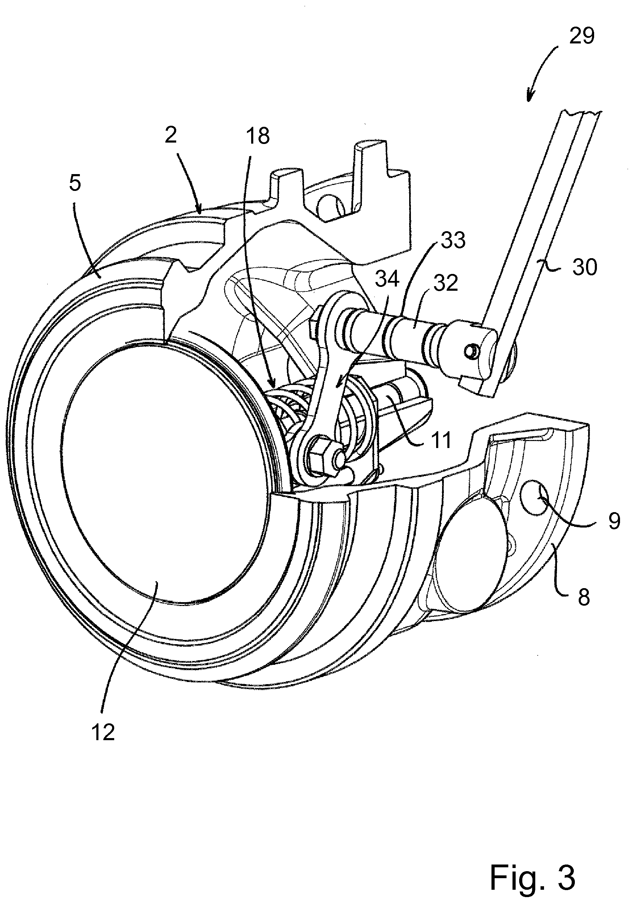

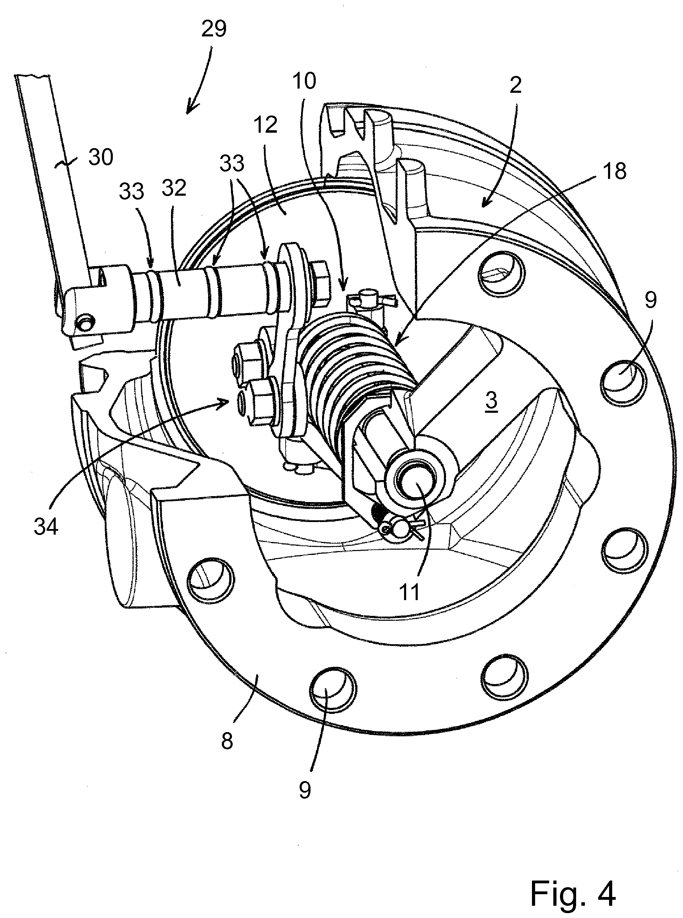

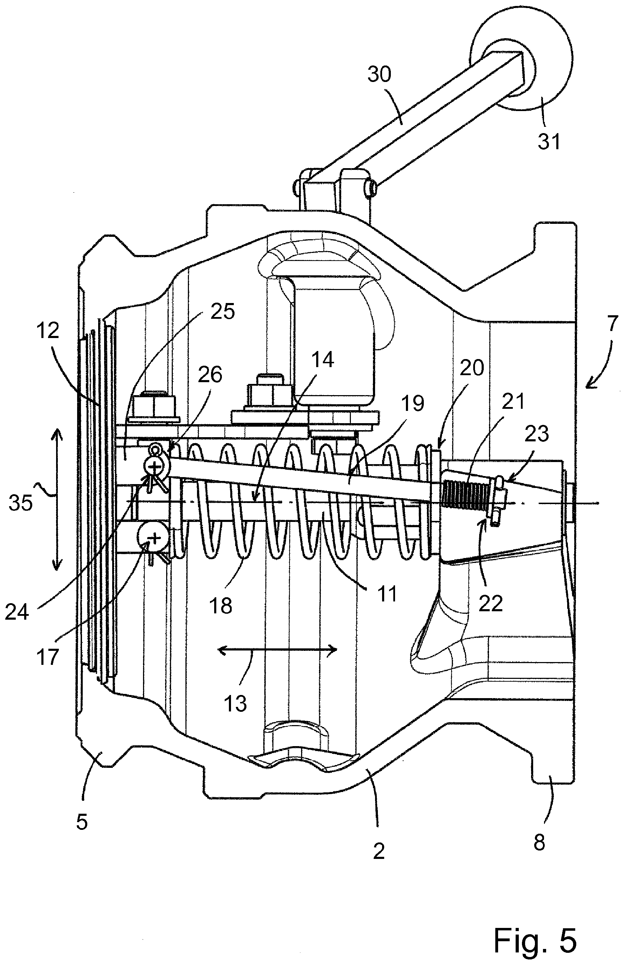

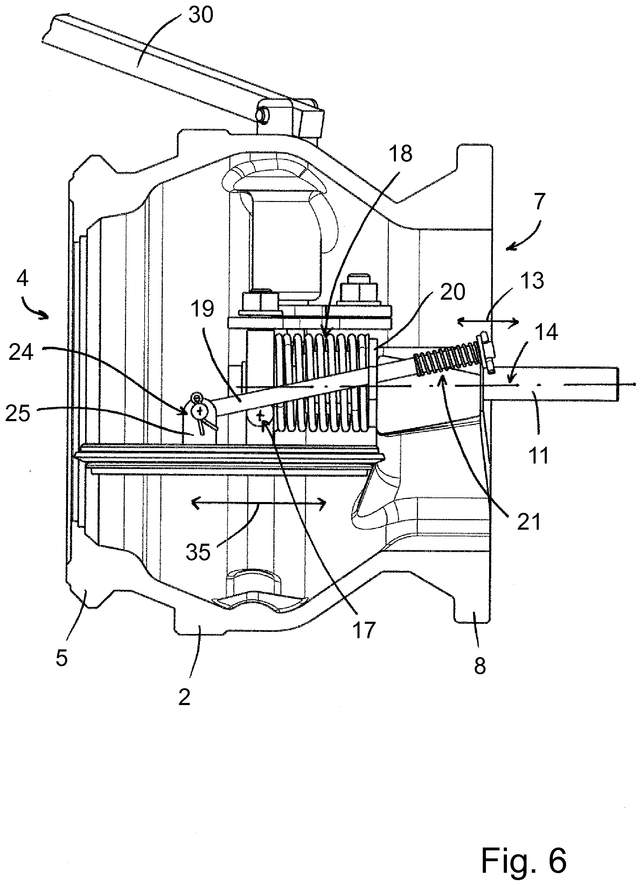

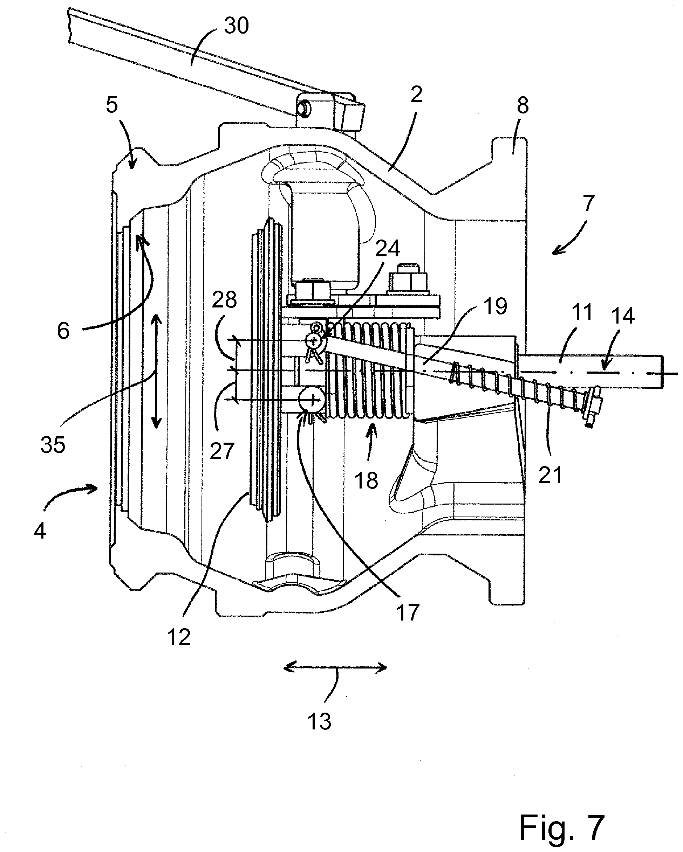

Eine erfindungsgemäße Anschlussarmatur für ein nicht dargestelltes Mineralöltankfahrzeug nach den Fig. 1 bis 7 umfasst als wesentliche Komponenten ein Gehäuse 1, ein Ventilmodul 10 und ein Betätigungsmodul 29.

Das Gehäuse 1 sieht eine im Wesentlichen zylindrische beziehungsweise mantelseitig geschlossene Gehäusewandung 2 und einen von der Gehäusewandung 2 nach innen abragenden Träger 3 vor. Das Gehäuse 1 definiert im Bereich zweier sich gegenüberliegenden Stirnseiten eine erste Durchflussöffnung 4 für eine Flüssigkeit und eine zweite Durchflussöffnung 7 für die Flüssigkeit. Das Gehäuse 1 ist bevorzugt aus einem metallischen Werkstoff hergestellt und sieht einen der ersten Durchflussöffnung 4 zugeordneten, die erste Durchflussöffnung 4 ringförmig umgebenden ersten Flansch 5 sowie ein der zweiten Durchflussöffnung 7 zugeordneten zweiten Flansch 8 vor. An dem zweiten Flansch 8 ist eine Mehrzahl von zueinander beabstandeten Befestigungsbohrungen 9 vorgesehen, welche dazu dienen, die Anschlussarmatur insbesondere an dem Mineralöltankfahrzeug festzulegen.

Das Ventilmodul 10 ist von der Gehäusewandung 2 des Gehäuses 1 mantelseitig jedenfalls abschnittsweise umgriffen. Das Ventilmodul 10 sieht eine an dem Träger 3 des Gehäuses gehaltene Ventilstange 11 und einen an der Ventilstange 11 gehaltenen Ventilteller 12 vor. Die Ventilstange 11 ist im Wesentlichen zylindrisch ausgebildet. Sie ist in eine Axialrichtung 13 längsverschiebbar gehalten. Der Ventilstange 11 ist hierbei eine Rückstellfeder 18 zugeordnet, welche die Ventilstange 11 umgreift und zwischen dem Träger 3 und dem Ventilteller 12 vorgesehen ist.

Zur Befestigung des Ventiltellers 12 an der Ventilstange 11 ist ein Scharnier mit einem ersten, an der Ventilstange 11 festgelegten Scharnierelement 15 und einem an dem Ventilteller 12 festgelegten zweiten Scharnierelement 16 vorgesehen. In Bezug auf eine durch das Scharnier definiert Drehachse 17 ergibt sich so eine schwenkbare Anordnung des Ventiltellers 12 in Bezug zur Ventilstange 11. Die Drehachse 17 ist senkrecht zu der Axialrichtung 13 orientiert und beabstandet zu einer in die Axialrichtung 13 erstreckten Mittelachse 14 der Ventilstange 11. Durch die Beabstandung der Drehachse 17 von der Mittelachse 14 ist eine exzentrische Festlegung des Ventiltellers 12 an der Ventilstange 11 gebildet.

Zusätzlich sieht das Ventilmodul 10 einen Exzenterhebel 19 vor, welcher in einem Gelenkpunkt drehbar und längsverschiebbar an einem mit dem Träger 3 des Gehäuses 1 verbundenen Lagerelement 20 einerseits und um eine Schwenkachse 24 drehbar an dem Ventilteller 12 andererseits gehalten ist. Die Schwenkachse 24 des Exzenterhebels 19 ist hierbei parallel zur Drehachse 17 des Ventiltellers 12 orientiert. Die Drehachse 17 und die Schwenkachse 24 sind jeweils senkrecht orientiert zur Axialrichtung 13 beziehungsweise zur Mittelachse 14 der Ventilstange 11.

In einer Schließstellung der erfindungsgemäßen Anschlussarmatur ist der scheibenförmige Ventilteller 12, welcher in einer Erstreckungsebene 35 flach ausgebildet ist, gegen einen im Bereich der ersten Durchflussöffnung 4 an dem Gehäuse 1 gebildeten Ventilsitz 6 angelegt. Die Anlage des Ventiltellers 12 an dem Ventilsitz 6 ist in der Art realisiert, dass die erste Durchflussöffnung 4 geschlossen ist. Zur Herstellung der Anlage befindet sich die Ventilstange 11 des Ventilmoduls 10 in einer ersten Axialposition und die Erstreckungsebene 35 des Ventiltellers 12 ist senkrecht zur Axialrichtung 13 orientiert. Die Schwenkachse 24 und die Drehachse 17 befinden sich auf gegenüberliegenden Seiten der Mittelachse 14 der Ventilstange 11. Ein minimaler Abstand 27, 28 der Drehachse 17 und der Schwenkachse 24 zu der Mittelachse 14 der Ventilstange 11 ist im Wesentlichen gleich gebildet.

Um einen Tank des die erfindungsgemäße Anschlussarmatur aufweisenden Mineralöltankfahrzeugs mit der Flüssigkeit zu befüllen, wird das Ventilmodul in die Befüllstellung verbracht. Hierzu wird die Ventilstange 11 mit dem daran festgelegten Ventilteller 12 axial verschoben in eine zweite Axialstellung. In der Befüllstellung ist zwischen dem Ventilsitz 6 und dem Ventilteller 12 ein Ringspalt für die Flüssigkeit gebildet. Die Flüssigkeit kann insofern über die erste Durchflussöffnung 4 in die Anschlussarmatur einströmen und gelangt über den Ringspalt zu der zweiten Durchflussöffnung 7 und von dort weiter in Richtung des Tanks des Mineralöltankfahrzeugs. In der Befüllstellung ist die Rückstellfeder 18 auf Druck vorgespannt.

Die axiale Verschiebung der Ventilstange 11 mit dem daran angelegt Ventilteller 12 wird beim Befüllen des Tanks über eine externe Kraft eingeleitet, welche auf den Ventilteller 12 wirkt. Insbesondere wird der Ventilteller 12 auf einer der Ventilstange 11 gegenüberliegenden Flachseite mechanisch kontaktiert und gegen die Rückstellfeder 18 axial verschoben. Die Rückstellfeder 18 stützt sich dabei gegen das erste Scharnierelement 15 einerseits und eine in dem Träger 3 des Gehäuses 1 angelegtes Lagerelement 20 andererseits.

In einer Entnahmestellung der erfindungsgemäßen Anschlussarmatur ist das Ventilmodul in der zweiten Axialposition vorgesehen. Der Ventilteller 12 ist hierbei jedoch um zumindest näherungsweise 90° bezogen auf die Schließstellung beziehungsweise die Befüllstellung geschwenkt angeordnet. Die Axialrichtung 13 der Ventilstange 11 ist in der Erstreckungsebene 35 des Ventiltellers 12 orientiert. Zum Entnehmen der Flüssigkeit aus dem Tank durchströmt diese zunächst die zweite Durchflussöffnung 7 und das Ventilmodul 10 und tritt über die erste Durchflussöffnung 4 aus der erfindungsgemäßen Anschlussarmatur aus. Aufgrund der geschwenkten Anordnung des Ventiltellers12 ist hierbei kein Ringspalt zwischen dem Ventilteller 12 und dem Ventilsitz 6 gebildet. Insofern strömt die Flüssigkeit entlang des in eine Strömungsrichtung gedrehten Ventiltellers 12 im Wesentlichen gradlinig durch die erfindungsgemäße Anschlussarmatur.

Zum Verbringen der Anschlussarmatur in die Entnahmestellung bedarf es keiner externen, auf den Ventilteller aufgeprägten Kraft. Vielmehr wird das Ventilmodul über das Betätigungsmodul verstellt und zunächst durch eine Linearverschiebung die Ventilstange in die zweite Axialposition verbraucht. Um dann in die Entnahmestellung zu gelangen, bedarf es keiner aktiven Betätigung der erfindungsgemäßen Anschlussarmatur. Vielmehr erfolgt die Schwenkbewegung des Ventiltellers um die Drehachse 17 selbsttätig allein aufgrund der durch die Anschlussarmatur strömenden Flüssigkeit. Es ist so, dass aufgrund der exzentrischen Festlegung des Ventiltellers 12 eine der Ventilstange 11 des Ventilmoduls10 zugewandte Rückseite des Ventiltellers 12 in der ursprünglichen Orientierung (Befüllstellung) von der Flüssigkeit angeströmt wird und die Flüssigkeit selbst aufgrund der außermittigen Lage der Drehachse 17 an dem Ventilteller 12 die Schwenkbewegung um die Drehachse 17 einleitet. Mechanische Betätigungsmittel beziehungsweise Aktoren zum Verbringen des Ventilmoduls 10 in die Entnahmestellung sind daher nicht erforderlich.

Um das Ventilmodul 10 nach der Entnahme der Flüssigkeit aus dem Tank des Mineralöltankfahrzeugs in die Schließstellung zu verbringen, wird die Ventilstange 11 von der zweiten Axialposition in Richtung der ersten Axialposition längsverschoben. Im Zuge der Verschiebung gelangt nach zirka einem Drittel des axialen Stellwegs eine den Exzenterhebels 19 umgreifend Betätigungsfeder 21 in Wirkverbindung mit dem Lagerelement 20. Infolge der Wirkverbindung zwischen der Betätigungsfeder 21 und dem Lagerelement 20 wird auf den Exzenterhebel 19 eine Zugbelastung aufgeprägt, welche dazu führt, dass der Ventilteller 12 um die Drehachse 17 zurückschwenkt. Zur Festlegung des Exzenterhebels 19 an dem Ventilteller 12 ist insofern der Exzenterhebel 19 L-förmig ausgebildet, wobei der Exzenterhebel 19 mit einem dem Ventilteller 12 zugewandten freien Ende desselben in ein an dem Ventilteller 12 außermittig festgelegtes Halteelement 25 eingreift. In Bezug auf das Halteelement 25 ist der Exzenterhebel 19 drehbar festgelegt. Eine Festlegung des Exzenterhebels 19 an dem Halteelement 25 erfolgt über einen Splint 26. Ebenfalls ist an dem Exzenterhebel 19 an einem dem Ventilteller 12 abgewandten freien Ende desselben ein weiterer Splint 23 vorgesehen. Gegen den Splint 23 ist eine Scheibe 22 und gegen die Scheibe 22 die Betätigungsfeder 21 angelegt, welche den Exzenterhebel19 auf einer dem Ventilteller 12 abgewandten Seite des Lagerelements 20 umgreift. Die Betätigungsfeder 21 wird insofern zwischen dem Lagerelement 20 einerseits und der durch den Splint 23 gehaltenen Scheibe 22 andererseits auf Druck belastet.

Aufgrund der speziellen Einbaulage kann die Betätigungsfeder 21 zwischen der Scheibe 22 und dem Lagerelement 20 auf Druck vorgespannt werden. Eine Zugbelastung der Betätigungsfeder 21 ist demgegenüber nicht vorgesehen. Insofern ist eine freie Verschiebung der Betätigungsfeder 21 an dem Exzenterhebel 19 vorgesehen für den Fall, dass die Ventilstange 11 in der zweiten Axialposition vorgesehen ist. Aufgrund der freien Anordnung der Betätigungsfeder 21 in der zweiten Axialposition ist der Exzenterhebel 19 in ebendieser sowohl in der Befüllstellung als auch in der Entnahmestellung unbelastet. Die Schwenkposition des Ventiltellers 12 ist dann alleine von der Strömungsrichtung der Flüssigkeit in der erfindungsgemäßen Anschlussarmatur definiert. Durchströmt die Flüssigkeit die Anschlussarmatur von der ersten Durchflussöffnung in Richtung der zweiten Durchflussöffnung, ist die Axialrichtung senkrecht zur Erstreckungsrichtung des Ventiltellers 12 orientiert und die Flüssigkeit wird in den Tank des Mineralöltankfahrzeugs gefördert. Bei der Entnahme der Flüssigkeit aus dem Tank durchströmt die Flüssigkeit die erfindungsgemäße Anschlussarmatur von der zweiten Durchflussöffnung 7 in Richtung der ersten Durchflussöffnung 4. Hierbei wird infolge der durchströmenden Flüssigkeit auf die Rückseite des Ventiltellers 12 aufgeprägten Kräfte der Ventilteller 12 verschwenkt. Die Rückstellung des Ventiltellers beim Schließen der Entnahmearmatur erfolgt dann über den Exzenterhebel 19 und die spezielle Anschlusskinematik desselben.

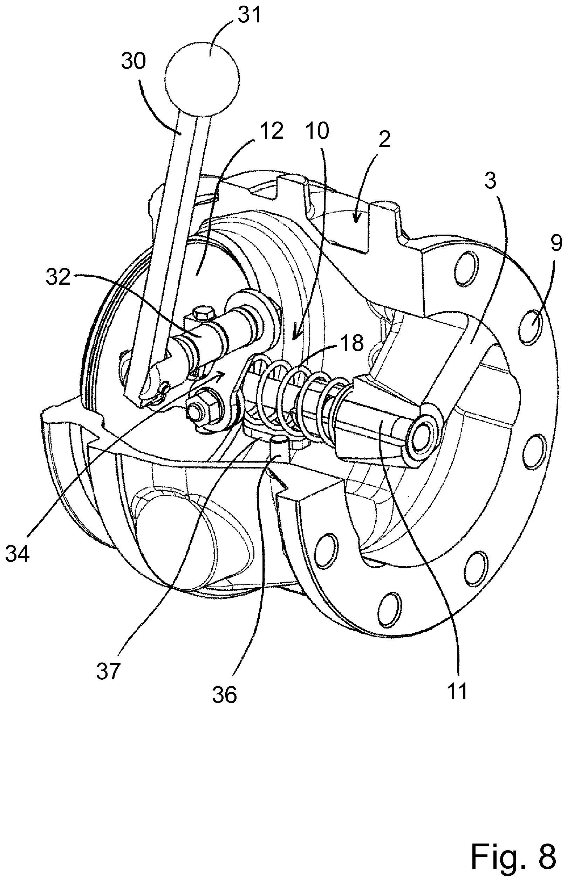

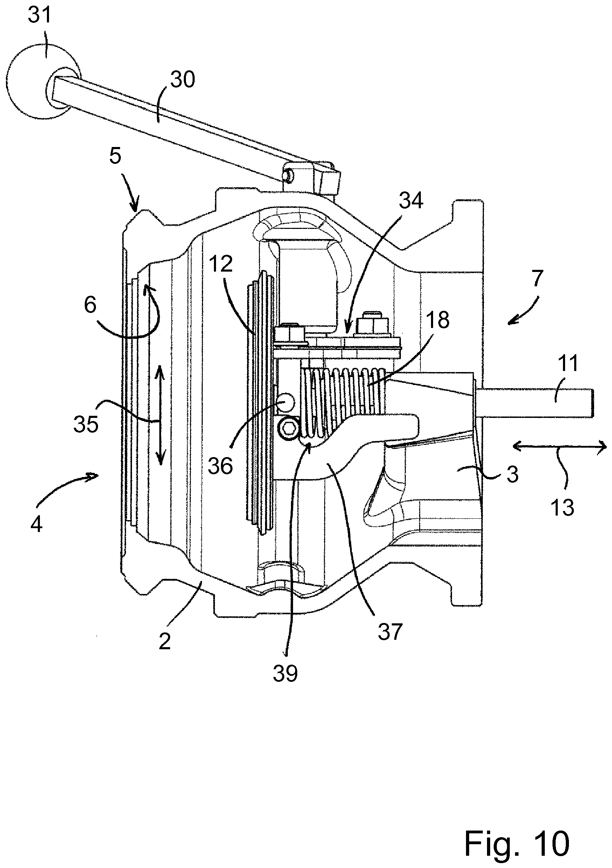

Eine zweite Ausführungsform der erfindungsgemäßen Anschlussarmatur nach den Fig. 8 bis 11 weist grundsätzlich die gleichen formbestimmenden Komponenten, nämlich das Gehäuse 1, das Ventilmodul 10 sowie das Betätigungsmodul 29 auf. Variiert sind die Kinematik zur Bewegung des Ventiltellers 12 und insbesondere die Verschwenkung des Ventiltellers 12 um die Drehachse 17. Es wird insofern nach der zweiten Ausführungsform der Erfindung auf den Exzenterhebel 19 sowie die Anbauelemente 20, 21, 22, 23 verzichtet. Vielmehr ist nach der zweiten Ausführungsform der Erfindung zur Beeinflussung der Schwenkbewegung des Ventiltellers 12 um die Drehachse 17 ein Stift 36 als Stützelement und eine Steuerkulisse 37 als Führungselement für den Ventilteller 12 vorgesehen. Die Steuerkulisse 37 ist drehfest mit dem Ventilteller 12 verbunden und so an dem Ventilteller 12 festgelegt, dass zusammen mit dem Ventilteller 12 die Steuerkulisse 37 sowohl in die Axialrichtung 13 verschoben als auch um die Drehachse 17 verschwenkt wird. Der Stift 36 ist in der Gehäusewandung 2 des Gehäuses 1 festgelegt. An der Gehäusewandung 2 ist dazu eine nicht dargestellte Bohrung, insbesondere eine Sacklochbohrung mit einem Gewinde vorgesehen. Ebenso verfügt der Stift 36 endseitig über ein Gewinde, sodass der Stift 36 mit der Gehäusewandung 2 verschraubt ist. Alternativ kann eine beliebige andere Art zur Festlegung des Stifts 36 an der Gehäusewandung 2 vorgesehen sein. Beispielsweise kann der Stift 36 mit der Gehäusewandung 2 verklebt und/oder stoffschlüssig mit der Gehäusewandung 2 verbunden sein, beispielsweise über eine Schweißung und/oder an der Gehäusewandung 2 angegossen sein. Die Stiftform ist hierbei für das Stützelement nicht zwingend.

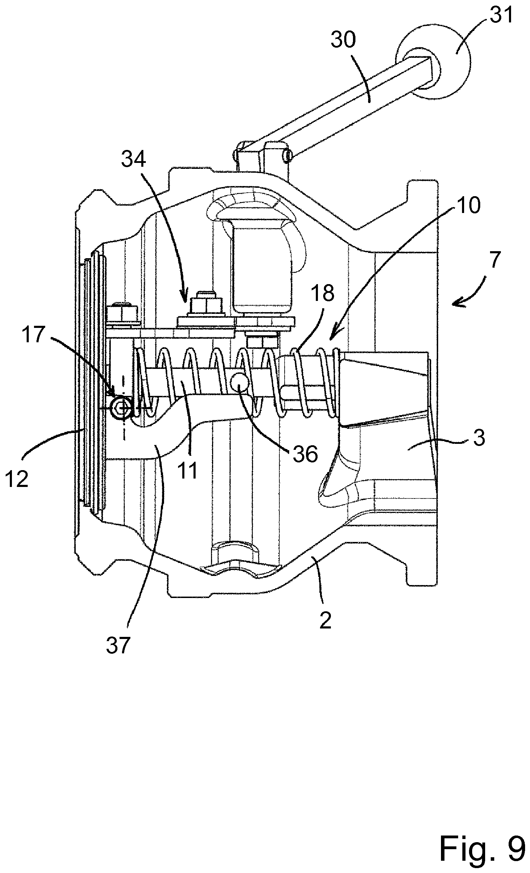

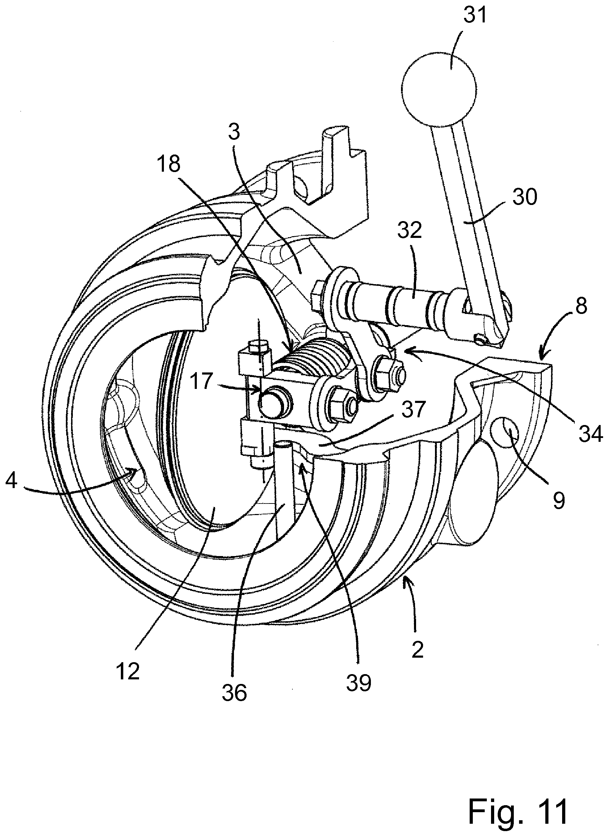

Der Stift 36 ist der Steuerkulisse 37 so zugeordnet, dass die Steuerkulisse 37 in der Schließstellung der Anschlussarmatur nach Fig. 9 in Bezug auf eine Drehbewegung um die Drehachse 17 blockiert ist. Wird nun das Ventilmodul 10 durch Verschieben der Ventilstange 11 mit dem daran festgelegten Ventilteller 12 in die Axialrichtung 13 aus der Schließstellung in die Entnahmestellung nach Fig. 11 verbracht, gelangt der Stift 36 in den Wirkbereich einer an der Steuerkulisse 37 ausgebildeten Mulde 39, sodass grundsätzlich die Schwenkbewegung des Ventiltellers 12 mit der daran festgelegten Steuerkulisse 37 freigegeben ist.

Sofern die Anschlussarmatur von der ersten Durchflussöffnung 4 in Richtung der zweiten Durchflussöffnung 7 von dem Mineralöl durchflossen wird, wird der Ventilteller 12 auf der der Steuerkulisse 37 gegenüberliegenden Flachseite beaufschlagt und infolge der exzentrischen Anordnung der Drehachse 17 eine Schwenkbewegung des Ventiltellers 12 nicht eingeleitet. Der Ventilteller 12 hat insofern bezogen auf seine Erstreckungsebene 35 eine senkrechte Orientierung zur Axialrichtung 13.

Wird demgegenüber die Anschlussarmatur von der zweiten Durchflussöffnung 7 in Richtung der ersten Durchflussöffnung 4 durchströmt, resultiert aufgrund der Strömungsrichtung und der unterschiedlichen Größe der bezogen auf die Drehachse 17 des Ventiltellers 12 an ebendiesem gebildeten Teilflächen eine Verschwenkung des Ventiltellers 12 um die Drehachse 17 mit der Folge, dass die Erstreckungsebene 35 sich im Wesentlichen in Richtung der Axialrichtung 13 orientiert und die Anschlussarmatur beziehungsweise das Ventilmodul 10 in die Entnahmestellung gelangt. Der Stift 36 greift hierbei in die an der Steuerkulisse 37 gebildete Mulde 39 ein. Eine Schwenkbewegung des Ventiltellers 12 kann beispielsweise durch eine Berührung zwischen dem Stift 36 und der Steuerkulisse 37 im Bereich der Mulde 39 realisiert sein.

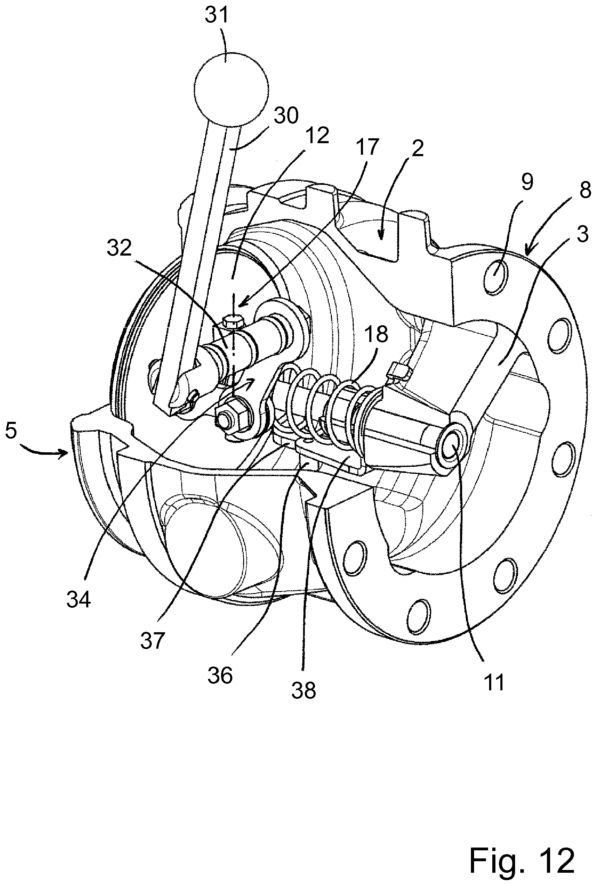

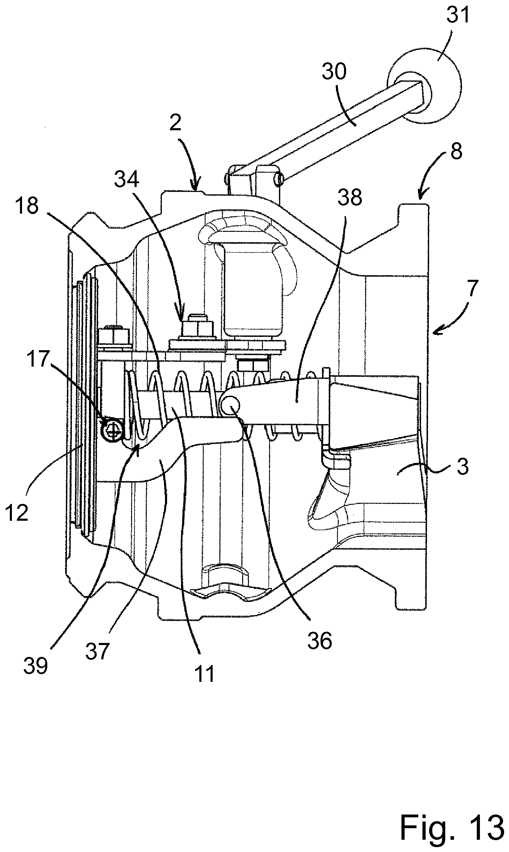

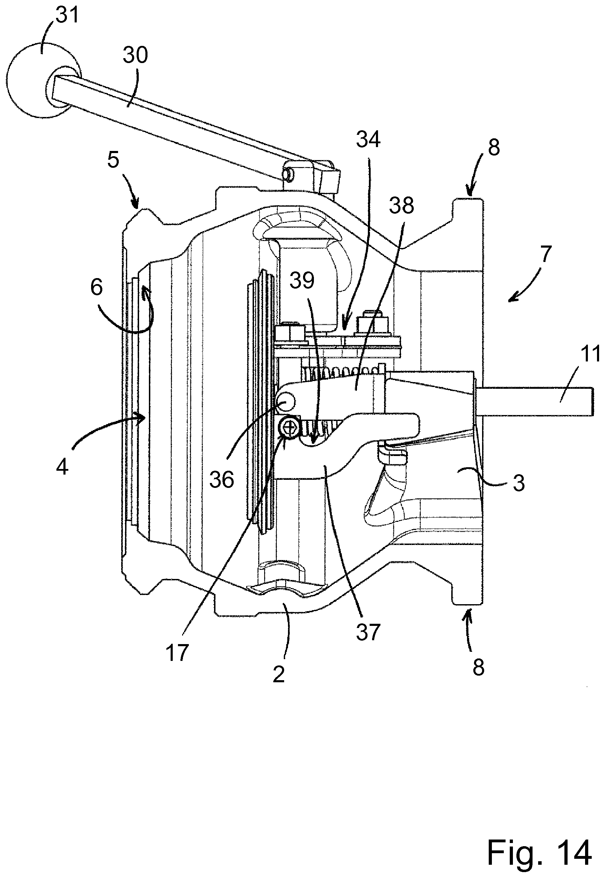

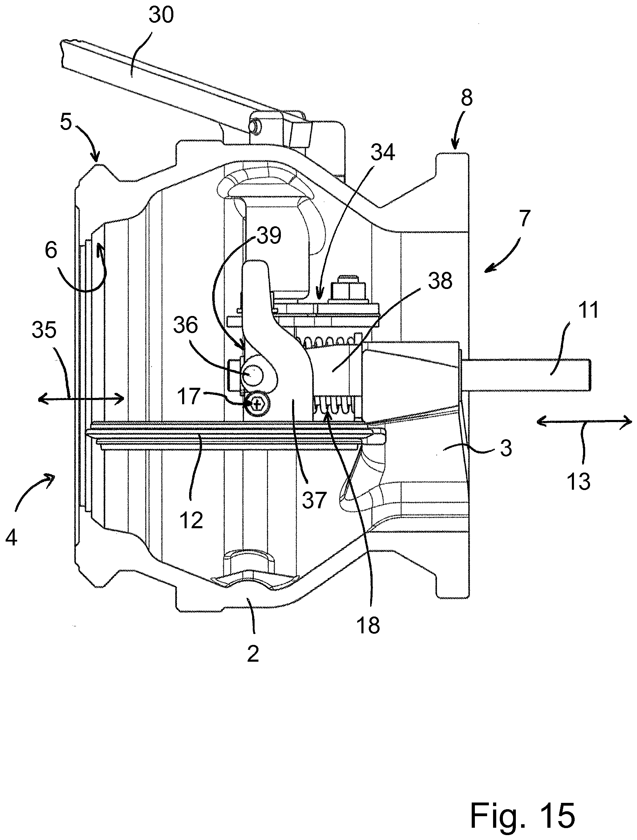

Die Fig. 12 bis 15 zeigen eine dritte Ausführungsform der erfindungsgemäßen Anschlussarmatur. Nach der dritten Ausführungsform der Erfindung sieht die Anschlussarmatur wie vorstehend beschrieben die an dem Ventilteller 12 festgelegte Steuerkulisse 37 und einen Stift 36 vor, welcher mit der Steuerkulisse 37 in der Schließstellung und/oder in der Befüllstellung und/oder in der Entnahmestellung in einer Wirkverbindung steht. Die Steuerkulisse 37 ist wie gehabt zusammen mit dem Ventilteller 12 in die Axialrichtung 13 verschiebbar und um die Drehachse 17 verschwenkbar. Der Stift 36 ist jedoch nicht unmittelbar an dem Gehäuse 1 festgelegt. Vielmehr ist der Stift 36 über einen Stiftträger 38 an dem Träger 3 des Gehäuses 1 festgelegt. Der Stiftträger 38 ist beispielsweise nach Art eines Blechumformteils gestaltet und der Stift 36 mit dem Stiftträger 38 stoffschlüssig beziehungsweise über eine nicht dargestellte Verschraubung lösbar verbunden. An der Steuerkulisse 37 ist wie vorstehend beschrieben die Mulde 39 ausgebildet, sodass in der Entnahmestellung der an dem Stiftträger 38 festgelegte Stift 36 im Bereich der Mulde 39 aufgenommen und gegen die Steuerkulisse 37 abgestützt ist.

Die Geometrie der Mulde 39 ist in der zweiten und in der dritten Ausführungsform der erfindungsgemäßen Anschlussarmatur dabei so festgelegt, dass bei der Rückverbringung des Ventilmoduls 10 aus der Entnahmestellung infolge der Längsverschiebung in die Axialrichtung 13 die Steuerkulisse 37 an dem ortsfesten Stift 36 entlanggeführt und die Rückverschwenkung des Ventiltellers 12 um die Drehachse 17 eingeleitet wird.

Gleiche Bauteile und Bauteilfunktionen sind durch gleiche Bezugszeichen gekennzeichnet.

## Patentansprüche

1. Anschlussarmatur für ein Mineralöltankfahrzeug mit einem Gehäuse (1) umfassend eine Gehäusewandung (2) und einen von der Gehäusewandung (2) nach innen abragenden Träger (3), wobei an dem Gehäuse (1) an zwei gegenüberliegenden Stirnseiten eine erste Durchflussöffnung (4) für eine Flüssigkeit und eine zweite Durchflussöffnung (7) für die Flüssigkeit vorgesehen ist, mit einem von der Gehäusewandung (2) jedenfalls abschnittsweise umgriffenen und an dem Träger (3) des Gehäuses (2) gehaltenen Ventilmodul (10) umfassend eine in einer Axialrichtung (13) verschiebbar gehaltene Ventilstange (11), eine die Ventilstange (11) umgreifende und zwischen dem Träger (3) und dem Ventilteller (12) vorgesehene Rückstellfeder (18) und einen an der Ventilstange (11) jedenfalls mittelbar gehaltenen Ventilträger, wobei in einer Schließstellung des Ventilmoduls (10) die Ventilstange (11) in einer ersten Axialposition vorgesehen ist und der Ventilteller (12) die erste Durchflussöffnung (4) verschließt, wobei in einer Befüllstellung des Ventilmoduls (10) die Ventilstange (11) in einer zweiten Axialposition vorgesehen ist, die Rückstellfeder (18) auf Druck vorgespannt ist und der Ventilteller (12) beabstandet zur der ersten Durchflussöffnung (4) vorgesehen ist zur Freigabe derselben und wobei die Axialrichtung (13) in der Schließstellung und in der Befüllstellung senkrecht zu einer Erstreckungsebene (35) des Ventiltellers (12) orientiert angeordnet ist, und mit einem Betätigungsmodul, welches mit dem Ventilmodul (10) in einer Wirkverbindung steht und ausgebildet ist zum Verbringen des Ventilmoduls (10) in die Schließstellung und/oder in die Befüllstellung, **dadurch gekennzeichnet, dass** der Ventilteller (12) um eine Drehachse (17) schwenkbar in Bezug zu der Ventilstange (11) gehalten ist und dass der Ventilteller (12) in einer Entnahmestellung des Ventilmoduls (10) beabstandet zu der ersten Durchflussöffnung (4) vorgesehen ist und diese freigibt, wobei in der Entnahmestellung die Ventilstange (11) in der zweiten Axialposition angeordnet ist und zwischen der Axialrichtung (13) und der Erstreckungsebene (35) des Ventiltellers (12) in der Entnahmestellung ein Winkel von 10° oder weniger ausgebildet ist.

2. Anschlussarmatur nach Anspruch 1, **dadurch gekennzeichnet, dass** die Drehachse (17) des Ventiltellers (12) senkrecht zu der Axialrichtung (13) orientiert ist, in die die Ventilstange (11) längsverschiebbar gehalten ist.

3. Anschlussarmatur nach Anspruch 1 oder 2, **dadurch gekennzeichnet, dass** der Ventilteller (12) exzentrisch an der Ventilstange (11) gehalten ist derart, dass die Drehachse (17) beabstandet zu einer in die Axialrichtung (13) orientierten Mittelachse der Ventilstange (11) vorgesehen ist.

4. Anschlussarmatur nach einem der Ansprüche 1 bis 3, **dadurch gekennzeichnet, dass** in der Entnahmestellung die Drehachse (17) des Ventiltellers (12) der Erstreckungsebene (35) derart zugeordnet ist, dass an einer der Ventilstange (11) gewandten Rückseite des Ventiltellers (12) beidseits der Drehachse (17) zwei unterschiedlich große Teilflächen gebildet sind derart, dass bei einer Durchströmung der Anschlussarmatur von der zweiten Durchflussöffnung (7) in Richtung der ersten Durchflussöffnung (4) aufgrund der Strömungsrichtung und der unterschiedlichen Größe der Teilflächen eine Verschwenkung des Ventiltellers (12) um die Drehachse (17) eingeleitet wird.

5. Anschlussarmatur nach einem der Ansprüche 1 bis 4, **dadurch gekennzeichnet, dass** zur Beeinflussung der Schwenkbewegung des Ventiltellers (12) um die Drehachse (17) ein Führungselement und ein mit dem Führungselement in der Schließstellung und/oder in der Befüllstellung und/oder in der Entnahmestellung in Wirkverbindung stehendes Stützelement vorgesehen sind, wobei entweder das Stützelement oder das Führungselement ortsfest bezogen auf das Gehäuse (1) vorgesehen ist und wobei das jeweils andere Element relativbeweglich zu dem ortsfesten Element gehalten ist.

6. Anschlussarmatur nach Anspruch 5, **dadurch gekennzeichnet, dass** als Stützelement ein Stift (36) vorgesehen ist, welcher ortsfest unmittelbar an der Gehäusewandung (2) oder jedenfalls mittelbar an dem Träger (3) des Gehäuses (1) gehalten ist.

7. Anschlussarmatur nach Anspruch 5 oder 6, **dadurch gekennzeichnet, dass** das Führungselement drehfest an dem Ventilteller (12) festgelegt ist und/oder dass das Führungselement nach Art einer Steuerkulisse (37) ausgebildet ist.

8. Anschlussarmatur nach einem der Ansprüche 1 bis 4, **dadurch gekennzeichnet, dass** das Ventilmodul (10) einen Exzenterhebel (19) vorsieht, wobei der Exzenterhebel (19) in einem Gelenkpunkt drehbar und längsverschiebbar an dem Träger (3) des Gehäuses (1) und/oder ein mit dem Träger (3) des Gehäuses (1) verbundenes Lagerelement (20) gehalten ist und wobei der Exzenterhebel (19) zudem um eine Schwenkachse (24) drehbar und beabstandet zu der Drehachse (17) des Ventiltellers (12) an ebendiesem gehalten ist.

9. Anschlussarmatur nach Anspruch 8, **dadurch gekennzeichnet, dass** dem Exzenterhebel (19) eine Betätigungsfeder (21) zugeordnet ist derart, dass beim Verbringen des Ventilmoduls (10) aus der Entnahmestellung in die Schließstellung der Ventilteller (12) selbsttätig verschwenkt bis die Erstreckungsebene (35) des Ventiltellers senkrecht orientiert angeordnet ist zu der Axialrichtung (13).

10. Anschlussarmatur nach Anspruch 8 oder 9 **dadurch gekennzeichnet, dass** die Schwenkachse (24) des Exzenterhebels (19) parallel orientiert ist zur Drehachse (17) des Ventiltellers (12) und/oder dass die Schwenkachse (24) des Exzenterhebels (19) senkrecht orientiert ist zu der Mittelachse (14) der Ventilstange (11).

11. Anschlussarmatur nach einem der Ansprüche 8 bis 10, **dadurch gekennzeichnet, dass** ein minimaler Abstand (28) der Schwenkachse (24) von der Mittelachse (14) der Ventilstange (11) einem minimalen Abstand (27) der Drehachse (17) des Ventiltellers (12) von der Mittelachse (14) entspricht und/oder dass der minimaler Abstand (28) der Schwenkachse (24) von der Mittelachse (14) größer ist als der minimale Abstand (27) der Drehachse (17) von der Mittelachse (14).

12. Anschlussarmatur nach einem der Ansprüche 8 bis 11, **dadurch gekennzeichnet, dass** die Drehachse (17) des Ventiltellers (12) und die Schwenkachse (24) des Exzenterhebels(19) in der Schließstellung und in der Befüllstellung auf gegenüberliegenden Seiten der Mittelachse (14) der Ventilstange (11) vorgesehen sind.

13. Anschlussarmatur nach einem der Ansprüche 8 bis 12, **dadurch gekennzeichnet, dass** die Drehachse (17) und die Schwenkachse (24) in der Erstreckungsstellung (35) des Ventiltellers (12) orientiert sind.

14. Anschlussarmatur nach einem der Ansprüche 1 bis 13, **dadurch gekennzeichnet, dass** das Betätigungsmodul nach Art einer Handhabe ausgebildet ist mit einem schwenkbaren Bedienhebel (30), einer mit dem Bedienhebel drehfest verbundenen Welle (32), welche durch die Gehäusewandung (2) geführt und gedichtet ist, und mit einem mit der Welle (32) in Wirkverbindung stehenden Gelenkhebelmechanismus (34), welcher ausgebildet ist zum Umsetzen der Drehbewegung der Welle in eine lineare Stellbewegung der Ventilstange (11) in die Axialrichtung (13).

## Claims

1. Connection fitting for a petroleum tanker vehicle with a housing (1) comprising a housing wall (2) and a support (3) protruding inwards from the housing wall (2), wherein a first flow opening (4) for a liquid and a second flow opening (7) for the liquid are provided on the housing (1) at two opposing end faces, with a valve module (10) encompassed by the housing wall (2) at least portion-wise and held on the support (3) of the housing (2), said valve module (10) comprising a valve rod (11) held displaceably in an axial direction (13), a return spring (18) gripping the valve rod (11) and provided between the support (3) and the valve head (12), and a valve carrier held in any case indirectly on the valve rod (11), wherein in a closing position of the valve module (10) the valve rod (11) is provided in a first axial position and the valve head (12) closes the first flow opening (4), wherein in a filling position of the valve module (10) the valve rod (11) is provided in a second axial position, the return spring (18) is pre-tensioned to pressure and the valve head (12) is provided remote from the first flow opening (4) for release thereof, and wherein the axial direction (13) in the closing position and in the filling position is perpendicular to an extension plane (35) of the valve head (12), and with an actuating module which is in operative connection with the valve module (10) and is provided to bring the valve module (10) into the closing position and/or into the filling position, **characterised in that** the valve head (12) is held pivotably around an axis of rotation (17) in relation to the valve rod (11) and **in that** the valve head (12) is provided in a removal position of the valve module (10) remote from the first flow opening (4) and releases it, wherein in the removal position the valve rod (11) is arranged in the second axial position and an angle of 10° or less is provided between the axial direction (13) and the extension plane (35) of the valve head (12) in the removal position.

2. Connection fitting according to claim 1, **characterised in that** the axis of rotation (17) of the valve head (12) is oriented perpendicular to the axial direction (13) in which the valve rod (11) is held displaceable longitudinally.

3. Connection fitting according to claim 1 or 2, **characterised in that** the valve head (12) is held eccentrically on the valve rod (11) such that the axis of rotation (17) is remote from a mid-axis of the valve rod (11) oriented in the axial direction (13).

4. Connection fitting according to any one of claims 1 to 3, **characterised in that** in the removal position the axis of rotation (17) of the valve head (12) is assigned to the extension plane (35) such that on a rear side of the valve head (12) facing the valve rod (11) on both sides of the axis of rotation (17) two differently sized large partial surfaces are formed such that when the connection fitting experiences a flow from the second flow opening (7) in the direction of the first flow opening (4) a pivoting of the valve head (12) around the axis of rotation (17) is initiated based on the direction of flow and the differing size of the partial surfaces.

5. Connection fitting according to any one of claims 1 to 4, **characterised in that** to influence the pivoting motion of the valve head (12) around the axis of rotation (17) a guide element and a support element in operative connection with the guide element in the closing position and/or in the filling position and/or in the removal position are provided, wherein either the support element or the guide element are provided immovable in relation to the housing (1) and wherein the respectively other element is held movable relative to the immovable element.

6. Connection fitting according to claim 5, **characterised in that** a rod (36) is provided as support element and is held in immovable direct on the housing wall (2) or at any rate indirectly on the support (3) of the housing (1).

7. Connection fitting according to claim 5 or 6, **characterised in that** the guide element is fixed non-rotationally on the valve head (12) and/or **in that** the guide element is constructed in the manner of a control link (37).

8. Connection fitting according to any one of claims 1 to 4, **characterised in that** the valve module (10) provides an eccentric lever (19), which is held in a point of articulation rotatably and displaceable longitudinally on the support (3) of the housing (1) and/or a bearing element (20) connected to the support (3) of the housing (1), and wherein the eccentric lever (19) is also held rotatably around a pivot axis (24) and remote from the axis of rotation (17) of the valve head (12) on said valve head (12).

9. Connection fitting according to claim 8, **characterised in that** an operating spring (21) is assigned to the eccentric lever (19) such that, when bringing the valve module (10) out of the removal position into the closing position, the valve head (12) automatically pivots until the plane of extension (35) of the valve head is perpendicular to the axial direction (13).

10. Connection fitting according to claim 8 or 9 **characterised in that** the pivot axis (24) of the eccentric lever (19) is oriented parallel to the axis of rotation (17) of the valve head (12) and/or **in that** the pivot axis (24) of the eccentric lever (19) is oriented perpendicular to the mid-axis (14) of the valve rod (11).

11. Connection fitting according to any one of claims 8 to 10, **characterised in that** a minimal distance (28) between the pivot axis (24) and the mid-axis (14) of the valve rod (11) matches a minimal distance (27) between the axis of rotation (17) of the valve head (12) and the mid-axis (14) and/or **in that** the minimal distance (28) between the pivot axis (24) and the mid-axis (14) is greater than the minimal distance (27) between the axis of rotation (17) and the mid-axis (14).

12. Connection fitting according to any one of claims 8 to 11, **characterised in that** the axis of rotation (17) of the valve head (12) and the pivot axis (24) of the eccentric lever (19) in the closing position and in the filling position are provided on opposing sides of the mid-axis (14) of the valve rod (11).

13. Connection fitting according to any one of claims 8 to 12, **characterised in that** the axis of rotation (17) and the pivot axis (24) are oriented in the extension position (35) of the valve head (12).

14. Connection fitting according to any one of claims 1 to 13, **characterised in that** the actuating module is provided in the manner of a handle with a pivotable operating lever (30), a shaft (32) connected non-rotatably to the operating lever, which is guided through the housing wall (2) and sealed, and with an articulated lever mechanism (34) in operative connection with the shaft (32), which is provided for translating the rotational movement of the shaft into a linear actuating movement of the valve rod (11) in the axial direction (13).

## Revendications

1. Robinetterie de raccordement pour un véhicule de transport de produits pétroliers, avec un boîtier (1) comprenant une paroi de boîtier (2) et un support (3) faisant saillie vers l'intérieur à partir de la paroi de boîtier (2), une première ouverture d'écoulement (4) pour un liquide et une deuxième ouverture d'écoulement (7) pour le liquide étant prévues sur le boîtier (1) sur deux faces frontales opposées, avec un module de soupape (10) qui est entouré au moins sur certaines parties par la paroi de boîtier (2) et maintenu sur le support (3) du boîtier (2), et qui comprend une tige de soupape (11) maintenue coulissante dans une direction axiale (13), un ressort de rappel (18) entourant la tige de soupape (11) et prévu entre le support (3) et le disque de soupape (12), et un support de soupape maintenu au moins indirectement sur la tige de soupape (11), dans laquelle, dans une position de fermeture du module de soupape (10), la tige de soupape (11) est prévue dans une première position axiale et le disque de soupape (12) ferme la première ouverture d'écoulement (4) et, dans une position de remplissage du module de soupape (10), la tige de soupape (11) est prévue dans une deuxième position axiale, le ressort de rappel (18) est précontraint en pression et le disque de soupape (12) est prévu à distance de la première ouverture d'écoulement (4) pour libérer celle-ci, et dans laquelle la direction axiale (13) dans la position de fermeture et dans la position de remplissage est orientée perpendiculairement à un plan d'extension (35) du disque de soupape (12) et comprenant un module d'actionnement qui est en liaison fonctionnelle avec le module de soupape (10) et qui est conçu pour amener le module de soupape (10) dans la position de fermeture et/ou dans la position de remplissage, **caractérisée en ce que** le disque de soupape (12) est maintenu pivotant autour d'un axe de rotation (17) par rapport à la tige de soupape (11) et que, dans une position de prélèvement du module de soupape (10), le disque de soupape (12) est prévu à distance de la première ouverture d'écoulement (4) et libère celle-ci, dans laquelle, dans la position de prélèvement, la tige de soupape (11) est disposée dans la deuxième position axiale et un angle de 10° ou moins est formé entre la direction axiale (13) et le plan d'extension (35) du disque de soupape (12) dans la position de prélèvement.

2. Robinetterie de raccordement selon la revendication 1, **caractérisée en ce que** l'axe de rotation (17) du disque de soupape (12) est orienté perpendiculairement à la direction axiale (13) dans laquelle la tige de soupape (11) est maintenue coulissante longitudinalement.

3. Robinetterie de raccordement selon la revendication 1 ou 2, **caractérisée en ce que** le disque de soupape (12) est maintenu excentriquement sur la tige de soupape (11) de telle sorte que l'axe de rotation (17) est prévu à distance d'un axe médian de la tige de soupape (11) orienté dans la direction axiale (13).

4. Robinetterie de raccordement selon l'une des revendications 1 à 3, **caractérisée en ce que**, dans la position de prélèvement, l'axe de rotation (17) du disque de soupape (12) est associé au plan d'extension (35) de telle sorte que, sur une face arrière du disque de soupape (12) tournée vers la tige de soupape (11), des deux côtés de l'axe de rotation (17), soient formées deux surfaces partielles de taille différente de telle sorte que, lorsque la robinetterie de raccordement est parcourue de la deuxième ouverture de passage (7) vers la première ouverture de passage (4), un pivotement du disque de soupape (12) autour de l'axe de rotation (17) est déclenché en raison du sens d'écoulement et de la taille différente des surfaces partielles.

5. Robinetterie de raccordement selon l'une des revendications 1 à 4, **caractérisée en ce que**, pour influencer le mouvement de pivotement du disque de soupape (12) autour de l'axe de rotation (17), il est prévu un élément de guidage et un élément d'appui qui est en liaison fonctionnelle avec l'élément de guidage dans la position de fermeture et/ou dans la position de remplissage et/ou dans la position de prélèvement, l'élément d'appui ou l'élément de guidage étant prévu fixe par rapport au boîtier (1) et l'autre élément respectif étant maintenu mobile par rapport à l'élément fixe.

6. Robinetterie de raccordement selon la revendication 5, **caractérisée en ce qu'**une broche (36) est prévue en tant qu'élément d'appui, laquelle est maintenue fixe directement sur la paroi de boîtier (2) ou au moins indirectement sur le support (3) du boîtier (1).

7. Robinetterie de raccordement selon la revendication 5 ou 6, **caractérisée en ce que** l'élément de guidage est fixé sur le disque de soupape (12) de manière solidaire en rotation et/ou que l'élément de guidage est conçu à la manière d'une coulisse de commande (37).

8. Robinetterie de raccordement selon l'une des revendications 1 à 4, **caractérisée en ce que** le module de soupape (10) présente un levier excentrique (19), le levier excentrique (19) étant maintenu rotatif et coulissant longitudinalement à un point d'articulation sur le support (3) du boîtier (1) et/ou un élément de palier (20) relié au support (3) du boîtier (1), et le levier excentrique (19) étant en outre maintenu rotatif autour d'un axe de pivotement (24) et sur le disque de soupape (12), à distance de l'axe de rotation (17) de ce dernier.

9. Robinetterie de raccordement selon la revendication 8, **caractérisée en ce qu'**un ressort d'actionnement (21) est associé au levier excentrique (19) de telle sorte que, lorsque le module de soupape (10) est déplacé de la position de prélèvement dans la position de fermeture, le disque de soupape (12) pivote automatiquement jusqu'à ce que le plan d'extension (35) du disque de soupape soit orienté perpendiculairement à la direction axiale (13).

10. Robinetterie de raccordement selon la revendication 8 ou 9, **caractérisée en ce que** l'axe de pivotement (24) du levier excentrique (19) est orienté parallèlement à l'axe de rotation (17) du disque de soupape (12) et/ou que l'axe de pivotement (24) du levier excentrique (19) est orienté perpendiculairement à l'axe médian (14) de la tige de soupape (11).

11. Robinetterie de raccordement selon l'une des revendications 8 à 10, **caractérisée en ce qu'**une distance minimale (28) entre l'axe de pivotement (24) et l'axe médian (14) de la tige de soupape (11) correspond à une distance minimale (27) entre l'axe de rotation (17) du disque de soupape (12) et l'axe médian (14) et/ou que la distance minimale (28) entre l'axe de pivotement (24) et l'axe médian (14) est supérieure à la distance minimale (27) entre l'axe de rotation (17) et l'axe médian (14).

12. Robinetterie de raccordement selon l'une des revendications 8 à 11, **caractérisée en ce que** l'axe de rotation (17) du disque de soupape (12) et l'axe de pivotement (24) du levier excentrique (19) sont prévus sur des côtés opposés de l'axe médian (14) de la tige de soupape (11) dans la position de fermeture et dans la position de remplissage.

13. Robinetterie de raccordement selon l'une des revendications 8 à 12, **caractérisée en ce que** l'axe de rotation (17) et l'axe de pivotement (24) sont orientés dans la position d'extension (35) du disque de soupape (12).

14. Robinetterie de raccordement selon l'une des revendications 1 à 13, **caractérisée en ce que** le module d'actionnement est conçu à la manière d'une poignée avec un levier de manœuvre pivotant (30), un arbre (32) qui est relié de manière solidaire en rotation au levier de manœuvre et qui est conduit à travers la paroi du boîtier (2) et rendu étanche, et avec un mécanisme à levier articulé (34) qui est en liaison fonctionnelle avec l'arbre (32) et est conçu pour convertir le mouvement de rotation de l'arbre en un mouvement linéaire de la tige de soupape (11) dans la direction axiale (13).
